# EUROPÄISCHE PATENTSCHRIFT

(11) **EP 0 725 213 B1**
(45) Veröffentlichungstag und Bekanntmachung des Hinweises auf die Patenterteilung: **16.06.1999**
(21) Anmeldenummer: 96101006.3
(22) Anmeldetag: 25.01.1996
(51) Int. Cl.: F02F 7/00, F01L 1/46, F01L 1/02

(54) **Montageeinheit eines Steuertriebes zur vorpositionierten Montage an einem Verbrennungsmotor**
Camshaft drive assembly for fitting in a predetermined position in an internal combustion engine
Module de montage pour la commande d'arbre à came pour le montage prépositionné dans un moteur à combustion interne

(30) Priorität: 01.02.1995 DE 19503105
(43) Veröffentlichungstag der Anmeldung: 07.08.1996
(73) Patentinhaber: ContiTech Antriebssysteme GmbH, 30165 Hannover (DE)
(72) Erfinder: Schulte, Hermann, D-30823 Garbsen (DE); Hindersmann, Martin, D-30419 Hannover (DE)
(74) Vertreter: Schneider, Egon

(56) Entgegenhaltungen:
- EP-A- 0 188 951
- DE-A- 4 025 126
- FR-A- 2 644 514

## Beschreibung

Die Erfindung betrifft eine Montageeinheit eines Steuertriebs zur vorpositionierten Montage an einem Verbrennungsmotor mit einem aus mindestens einem vorderen Gehäuseteil und einem hinteren Gehäuseteil bestehenden Getriebegehäuse und den darin untergebrachten Elementen des Steuertriebs, die mindestens ein auf einer Kurbelwelle aufsetzbares Kurbelwellenrad, mindestens ein auf einer Nockenwelle aufsetzbares Nockenwellenrad, ein die Räder verbindendes Zugmittel und ggf. ein Spannelement und weitere Nebenaggregate umfassen, wobei die Vorpositionierung des Steuertriebs mittels an einem der Gehäuseteile vorgesehene Einrichtungen erfolgt.

Ein ähnlicher Steuertrieb ist als komplett vormontierte Einheit aus der FR-A-2 545 193 bekannt. Der Steuertrieb soll gewährleisten, daß die Nockenwelle eines Verbrennungsmotors synchron mit der Kurbelwelle angetrieben wird. Über ihn können weitere Baugruppen, wie beispielsweise eine Einspritzpumpe oder eine Wasserpumpe betrieben werden. Bei dem bekannten Steuertrieb erfolgt der synchrone Antrieb der Nockenwelle über eine das Kurbelwellenrad mit dem Nockenwellenrad verbindene Kette. In der mit der Stirnwand des Motors zu verbindenden Gehäusehälfte sind in der vormontierten Einheit Rippen angebracht, die der Kontur der Zahnräder entsprechen. Zum Vormontieren werden die Zahnräder in diese Rippen eingelegt und sollen beim Transport der vormontierten Einheit an ihrem Platz gehalten werden. Die se Rippen können aber nur die seitliche Verschiebung und nicht eine axiale Lageveränderung oder eine Drehung der Zahnräder verhindern. Da die Steuerzeiten durch die relative Lage der Zähne des Kurbelwellenrades und des Nockenwellenrades zueinander beeinflußt werden, müssen beide Räder vor der endgültigen Montage auf der Nockenwelle bzw. der Kurbelwelle noch entsprechend justiert werden. Hierzu wird beispielsweise eine Kunststoffschablone mit zylindrischer Kontur vorgeschlagen, die in die Paßfedernuten der Zahnräder eingreift und dadurch die Zahnräder ausrichtet. Bei der Montage der Steuereinheit wird das Getriebegehäuse dann so mit der Motorstirnwand verbunden, daß die Zahnräder positioniert auf die entsprechende Welle aufgesteckt werden. Die Schablone muß vor dem endgültigen Zusammenbau entfernt werden.

Nachteilig hieran ist, daß die Steuertrieb-Einheit zunächst mit einer Schablone vorpositioniert, vor der Montage mit dem Verbrennungsmotor endgültig ausgerichtet und die Schablone anschließend entfernt werden muß.

Die vorliegende Erfindung beruht auf der Problemstellung, eine Montageeinheit eines Steuertriebs zu schaffen, die mit dem komplett positionierten Steuertrieb an die Motorstirnseite anflanschbar ist und bei dem eine Verstellung des Kurbelwellenrades und des Nockenwellenrades nach der Positionierung und vor der Montage sicher ausgeschlossen werden kann.

Ausgehend von dieser Problemstellung ist ein gattungsgemäßer Steuertrieb für einen Verbrennungsmotor dadurch gekennzeichnet, daß die Elemente des Steuertriebs zwischen den Gehäuseteilen durch nach innen ragende Vorsprünge und entsprechende Ausnehmungen in den Elementen des Steuertriebs formschlüssig vorpositionierbar sind (Transportposition A) und durch axiale Verschiebung der Gehäuseteile bei der Montage der Montageeinheit am Verbrennungsmotor die Elemente des Steuertrieb freilegbar sind (Betriebsposition B).

Hierdurch können die Zahnräder praktisch in das entsprechende Gehäuseteil eingelegt werden. Dabei werden diese nicht nur axial sondern auch in Umfangsrichtung fixiert, da ein Verdrehen sicher ausgeschlossen ist. Auf die so in ihrer Lage fixierten Räder kann das Zugmittel in bekannter Weise ungespannt aufgelegt werden.

Das hintere Gehäuseteil weist vorzugsweise eine Ausnehmung auf, in die ein Spannelement für das Zugmittel einsteckbar ist. Wenn die Ausnehmung koaxial zu einer der Befestigungsbohrungen für das Spannelement ist und an dem Montageexzenter des Spannelements ein dem Durchmesser der Ausnehmung entsprechender Ansatz ausgebildet ist, ist auch das Spannelement axial fixierbar.

In der Transportposition A können in vorteilhafter Ausbildung die Räder zwischen und durch die beiden Gehäuseteile gehalten werden, in dem der Abstand zwischen den Innenseiten der Gehäuseteile in der Transportposition A der Breite der Räder entspricht.

Zur Erzielung der Betriebsposition B werden beide Gehäuseteile in Axialrichtung relativ verschoben, bis sie vollständig außer Eingriff mit den Rädern sind.

Das erfindungsgemäße Komplettmodul bietet also den Vorteil, daß der ohne Positionierungsschablone vollständig positionierte und vormontierte Steuertrieb mit kleinster Bauhöhe (Transportposition A) an das Montageband angeliefert werden kann, dort mit der Stirnseite des Motors verschraubt wird und durch anschließendes Auseinanderziehen der vorderen und hinteren Gehäusehälfte, Spannen des Zugmittels, das sowohl als Kette als auch als Zahnriemen ausgebildet sein kann, sowie nach Einsetzen von Abstandshaltern der Steuertrieb betriebsbereit ist.

Vorzugsweise können in dem Gehäuse in derselben oder ähnlichen Art weitere Nebenaggregate wie beispielsweise eine Wasserpumpe oder eine Einspritzpumpe untergebracht sein. Das Spiel der Bauteile in der Abdeckung ist so bemessen, daß Fertigungstoleranzen vollständig durch die Verschiebung der Teile ausgeglichen werden können, aber die Steuerzeiten eindeutig definiert sind, wobei die endgültige Position für den Betrieb nach Einsetzen von geeigneten Abstandshaltern selbständig gefunden wird.

In einer vorteilhaften Ausgestaltung der Erfindung sind die Vorsprünge bolzenförmig ausgebildet und können für jedes der Räder wenigstens paarig so angeordnet sein, daß ein um 180° versetztes Aufstecken der Rädern ausgeschlossen ist.

Weiterhin vorzugsweise können die Gehäuseteile eine an sich bekannte schalldämmende Beschichtung aufweisen.

Eine besonders einfache Fixierung der Räder wird erreicht, wenn in dem hinteren, der Stirnwand des Motors zugeordneten Gehäuseteil profilierte Bohrungen vorgesehen werden, und das Bohrungsprofil dem Verzahnungsprofil der Räder entspricht. Insbesondere vorteilhaft ist, wenn zumindest das Kurbelwellenrad durch eine solche profilierte Bohrung fixierbar ist.

Eine besonders rationelle Befestigungsmöglichkeit für das Spannelement ist gegeben, wenn dieses über eine in dem der Stirnwand des Motors zugeordneten Gehäuseteil befestigte Blindnietschraube vormontierbar ist.

Anhand eines Ausführungsbeispieles soll die Erfindung nachfolgend näher erläutert werden. Es zeigt:
- Figur 1 -: den schematischen Querschnitt eines erfindungsgemäßen Steuertriebs in Transportposition,
- Figur 2 -: den schematischen Querschnitt eines erfindungsgemäßen Steuertriebs in Betriebsposition,
- Figur 3 -: die Draufsicht auf den Steuertrieb mit abgenommenem vorderen Gehäuseteil,
- Figur 4 -: den Schnitt durch den Steuertrieb entlang der Schnittlinie IV-IV nach Figur 3,
- Figur 5 -: eine Einzelheit des Steuertriebs in Transportposition,
- Figur 6 -: die schematische Darstellung der Befestigung des Spannelements im hinteren Gehäuseteil,
- Figur 7 -: ein Kurbelwellenrad in Seitenansicht,
- Figur 8 -: eine teilgebrochene Ansicht des hinteren Gehäuseteils bei einem weiteren Ausführungsbeispiel der Erfindung,
- Figur 9 -: den Schnitt entlang der Linie IX-IX,
- Figur 10 -: eine vergrößerte Teildarstellung aus Figur 8,
- Figur 11 -: den Schnitt entlang der Linie XI-XI nach Figur 10.

Das Steuertrieb-Komplettsystem besteht im wesentlichen aus dem ein vorderes Gehäuseteil 4a und ein hinteres Gehäuseteil 4b aufweisenden Gehäuse 4 mit dem darin untergebrachten Kurbelwellenrad 1 und dem Nockenwellenrad 2, die über einen Zahnriemen 3 miteinander gekoppelt sind. Das Gehäuse 4 wird zur Montage des positionierten Steuertriebs mit dem hinteren Gehäuseteil 4b an der Stirnseite 20 des Verbrennungsmotors befestigt. Das hintere Gehäuseteil 4b weist in das Innere des Gehäuses 4 hineinragende Vorsprünge 5, 6 auf, die beispielsweise bolzen- oder stiftförmig ausgebildet sein können. Sowohl das Kurbelwellenrad 1 als auch das Nockenwellenrad 2 sind mit einer zu den Vorsprüngen 5, 6 korrespondierenden Anzahl von Ausnehmungen 7, 8 versehen. Zur Positionierung werden die Räder 1, 2 so auf das Gehäuseteil 4b aufgelegt, daß die Vorsprünge 5, 6 in die entsprechenden Bohrungen 7, 8 eingreifen. Zur exakten Positionierung der Räder 1, 2 zueinander müssen ihre Zähne la, 2a eine definierte relative Lage zueinander einnehmen. Hierzu sind die Vorsprünge 5, 6 bzw. die als Bohrungen ausbildbaren Ausnehmungen 7, 8 so auf einem Teilkreis angeordnet, daß die Räder 1, 2 nur in einer einzigen Position aufsteckbar sind. Hierzu können die Vorsprünge 5, 6 beispielsweise unregelmäßig auf einem Teilkreis oder auf verschiedenen Teilkreisen verteilt angeordnet sein.

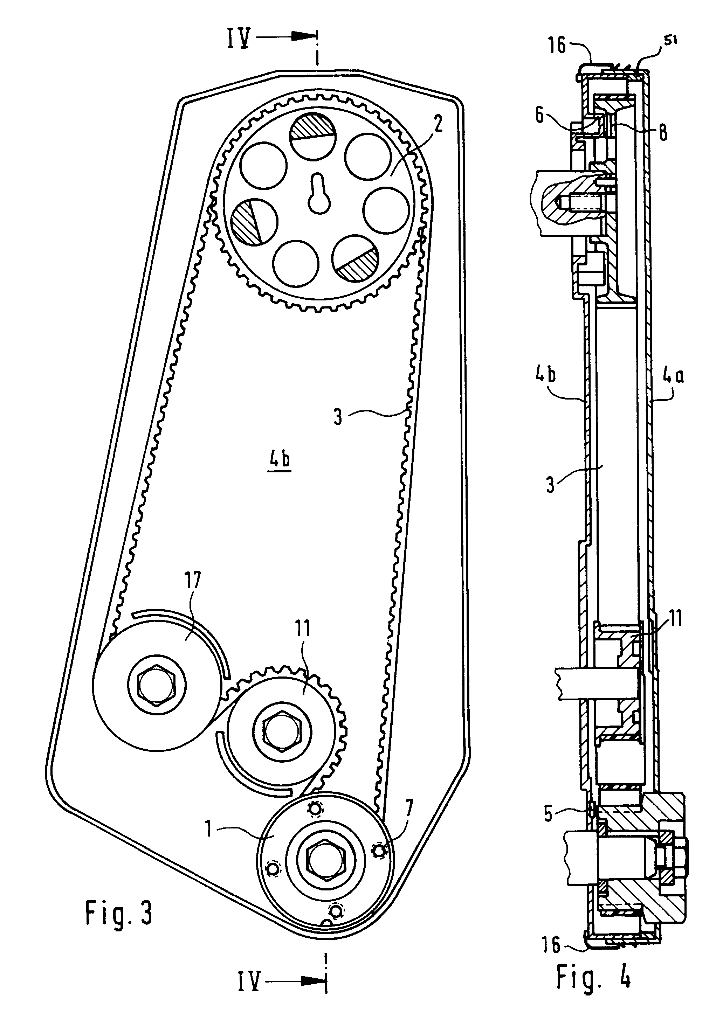

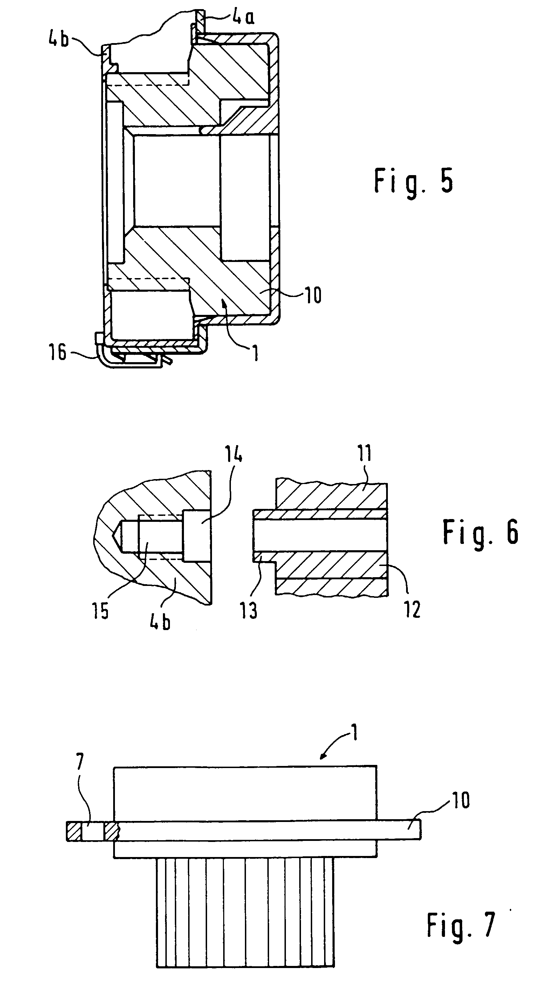

Wie den Figuren 3 und 4 entnehmbar ist, ist außerdem in dem hinteren Gehäuseteil 4b ein Spannelement 11 befestigt, mit dem der Zahnriemen 3 nach der Montage des Steuertriebes am Verbrennungsmotor gespannt werden kann.

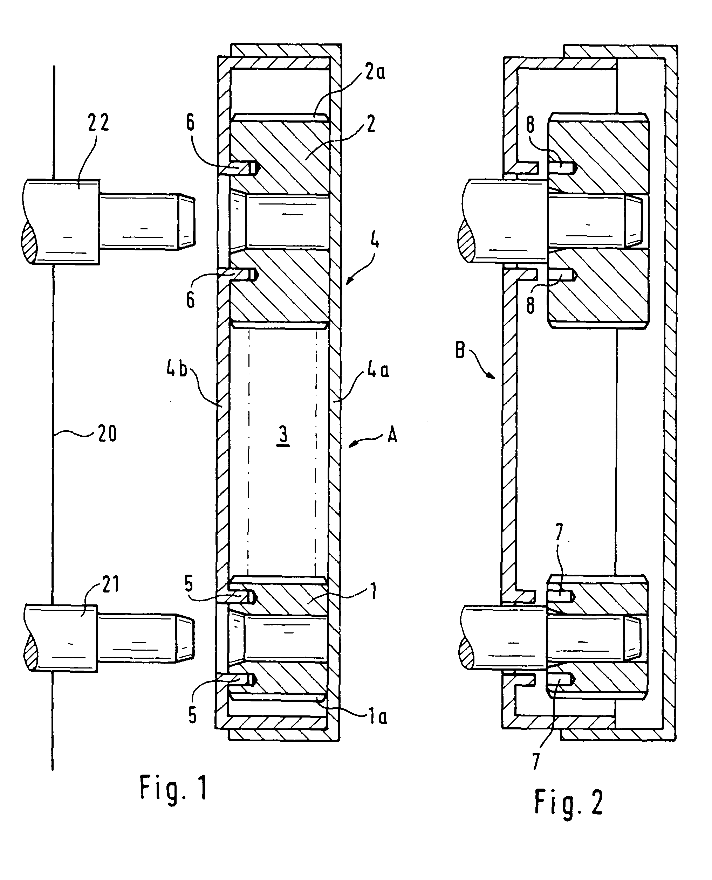

Beide Gehäuseteile 4a, 4b sind topfförmig ausgebildet, wobei die Innenkontur des vorderen Gehäuseteils 4a der Außenkontur des hinteren Gehäuseteils 4b entspricht, so daß die Gehäuseteile 4a, 4b zur Bildung des Gehäuses 4 ineinander schiebbar sind, wobei das vordere Gehäuseteil 4a das hintere Gehäuseteil 4b übergreift. Bei der in Figur 1 gezeigten Transportposition A sind die beiden Gehäuseteile 4a, 4b so ineinander geschoben, daß sie am Kurbelwellenrad 1 und Nockenwellenrad 2 anliegen. Die Gehäuseteile 4a, 4b können in dieser Position beispielsweise durch Klammern 16 fixiert werden. Neben den Rädern 1, 2 dem Zahnriemen 3 und dem Spannelement 11 können außerdem in dem Gehäuse auch noch die Wasserpumpe 17 und weitere Nebenaggregate, wie beispielsweise eine Öl- und/oder Lenkhilfpumpe, integriert sein.

Das Gehäuse 4 kann komplett auf die Stirnwand 20 des Motors so aufgesetzt werden, daß das Kurbelwellenrad 1 auf die Kurbelwelle 21 und gleichzeitig das Nockenwellenrad 2 auf die Nockenwelle 22 aufgesteckt werden. Hierzu müssen natürlich zuvor die Kurbelwelle 21 und die Nockenwelle 22 zueinander ausgerichtet worden sein, das heißt ungefähr in die Lage des Zünd-OT des ersten Zylinders gedreht worden sein. Die Wellen 21, 22 können in bekannter Weise über eine Paßfeder mit den Rädern 1, 2 verbunden werden. Anschließend werden die Klammern 16 gelöst und das vordere Gehäuseteil 4a abgezogen. Das hintere Gehäuseteil 4b wird mit der Stirnwand 20 des Motors beispielsweise verschraubt. Dabei wird das Gehäuseteil 4b bis zur Anlage an die Stirnwand 20 angezogen, wodurch die Vorsprünge 5, 6 außer Eingriff mit den Ausnehmungen 7, 8 der Räder 1, 2 kommen. In bekannter Weise können die Räder 1, 2 dann auf den Wellen 21, 22 befestigt und der Zahnriemen 3 über das Spannelement 11 gespannt werden. Abschließend wird das vordere Gehäuseteil 4a wieder über das hintere Gehäuseteil 4b geschoben und über die Klammern 16 sowie die Abstandshalter 51 in der Betriebsposition B, in der zwischen der Innenseite des Gehäuseteils 4a und den sich drehenden Bauteilen ein ausreichender Abstand eingehalten ist, fixiert.

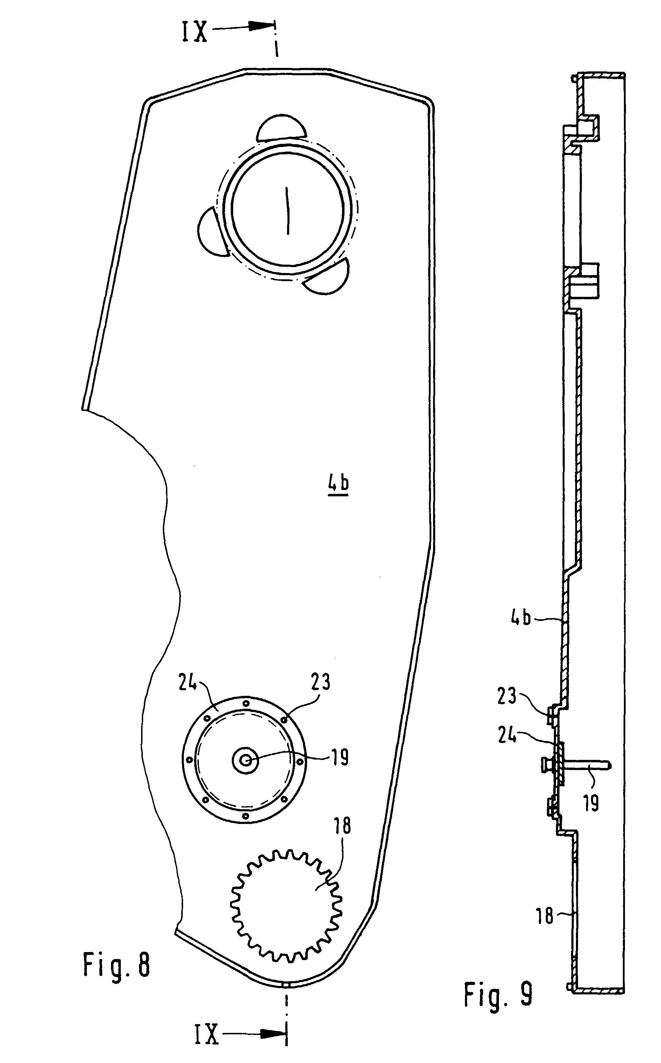

Figur 6 zeigt, wie das Spannelement 11 schon bei der Vormontage am Gehäuseteil 4b befestigt werden kann. Das motorseitige Gehäuseteil 4b trägt eine Gewindebohrung 15, in der das Spannelement 11 mittels einer hier nicht dargestellten Schraube befestigbar ist. Die Gewindebohrung 15 weist eine Aufbohrung 14 auf. Am Montageexzenter 12 des Spannelements 11 ist ein Ansatz 13 ausgebildet, dessen Außendurchmesser dem Innendurchmesser der Aufbohrung 14 entspricht. Hierdurch kann das Spannelement 11 einfach in das hintere Gehäuseteil 4b eingesteckt werden. Damit das Spannelement während des Transports nicht herausfällt, kann die Innenseite des vorderen Gehäuseteils 4a einen Vorsprung aufweisen, der am Spannelement in der Transportposition A anliegt.

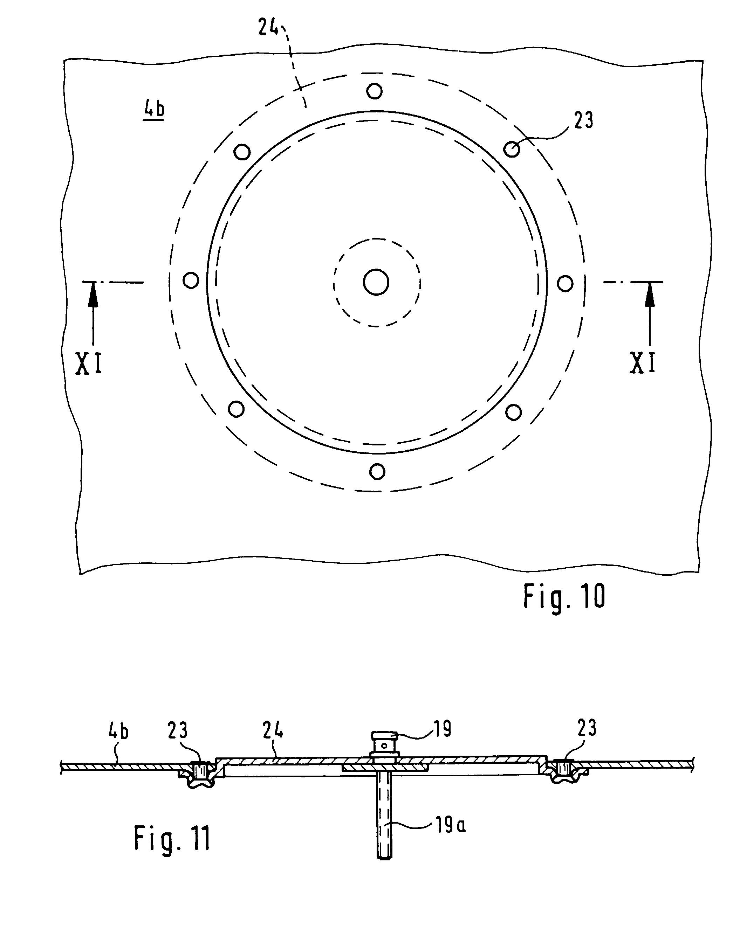

Vorteilhaft ist, wenn das Spannelement 11 auf einer Blindnietschraube 19 vormontierbar ist, die an dem hinteren Gehäuseteil 4b befestigt wurde. Eine solche Ausbildungsform ist den Figuren 10 und 11 entnehmbar. Zur Verstärkung des hinteren Gehäuseteils 4b ist an der Stelle, wo die Blindnietschraube 19 befestigt werden soll, eine Platte 24 über Stanznieten 23 mit dem hinteren Gehäuseteil 4b, der mit einer entsprechenden Ausnehmung versehen ist, vernietet. Das Gewinde 19a der Blindnietschraube 19 ragt in das Innere des Gehäuses 4, so daß das Spannelement 11 hieran festgeschraubt werden kann.

Figuren 5 und 7 zeigen eine vorteilhafte Ausgestaltung des Kurbelwellenrades 1, das mit einem Flansch zur Ausbildung einer topfförmigen Halterung 10 versehen sein kann, die in der Transportposition A am vorderen Gehäuseteil 4a anliegt. Wenn im vorderen Gehäuseteil 4a eine Ausnehmung vorhanden sein muß, weil beispielsweise weitere Aggregate mit dem Kurbelwellenrad verbunden werden müssen, kann diese Ausnehmung in der Transportposition A durch eine nicht näher dargestellte Abdeckhaube, die in das Innere des Gehäuses 4 eingelegt wird, verschlossen werden.

Ein Ausführungsbeispiel der Erfindung ist in Figuren 8 und 9 dargestellt. Anstatt die Elemente des Steuertriebs zwischen den Gehäuseteilen 4a, 4b durch nach innen ragende Vorsprünge 5, 6 und entsprechende Ausnehmungen 7, 8 an den Elementen zu positionieren ist es ebenfalls möglich, zumindest das Kurbelwellenrad 1 in dem hinteren Gehäuseteil 4b durch eine entsprechend dem Verzahnungsprofil des Kurbelwellenrades 1 profilierte Bohrung 18 zu fixieren.

## Patentansprüche

1. Montageeinheit eines Steuertriebs zur vorpositionierten Montage an einem Verbrennungsmotor mit einem aus mindestens einem vorderen Gehäuseteil (4a) und einem hinteren Gehäuseteil (4b) bestehenden Getriebegehäuse (4) und den darin untergebrachten Elementen des Steuertriebs, die mindestens ein auf einer Kurbelwelle aufsetzbares Kurbelwellenrad (1), mindestens ein auf einer Nockenwelle aufsetzbares Nockenwellenrad (2), ein die Räder (1,2) verbindendes Zugmittel (3) und gegebenenfalls ein Spannelement (11) und weitere Nebenaggregate umfassen, wobei die Vorpositionierung des Steuertriebs mittels an einem der Gehäuseteile (4a,4b) vorgesehene Einrichtungen erfolgt, **dadurch gekennzeichnet, daß** die Elemente des Steuertriebs zwischen den Gehäuseteilen (4a,4b) durch nach innen ragende Vorsprünge (5,6) und entsprechende Ausnehmungen (7,8) an den Elementen des Steuertriebs formschlüssig vorpositionierbar sind (Transportposition A) und durch axiale Verschiebung der Gehäuseteile (4a,4b) bei der Montage der Montageeinheit am Verbrennungsmotor die Elemente des Steuertriebs freilegbar sind (Betriebsposition B).

2. Montageeinheit nach Anspruch 1, **dadurch gekennzeichnet, daß** zur axialen Fixierung die Räder (1,2) in der Transportposition (A) zwischen und durch die Gehäuseteile (4a,4b) gehalten werden.

3. Montageeinheit nach Anspruch 1, **dadurch gekennzeichnet, daß** die Vorsprünge (5,6) bolzenförmig ausgebildet sind.

4. Montageeinheit nach Anspruch 1, **dadurch gekennzeichnet, daß** für jedes der Räder (1,2) wenigstens zwei Vorsprünge (5,6) vorgesehen sind.

5. Montageeinheit nach Anspruch 4, **dadurch gekennzeichnet, daß** die Vorsprünge (5,6) unregelmäßig auf einem Teilkreis angeordnet sind.

6. Montageeinheit nach Anspruch 1, **dadurch gekennzeichnet, daß** zumindest das Kurbelwellenrad (1) durch eine topfförmige Halterung (10) fixiert wird.

7. Montageeinheit nach Anspruch 6, **dadurch gekennzeichnet, daß** das Kurbelwellenrad (1) mit seinem axialen Flansch (10) in der Transportposition (A) an das Oberteil (4b) anstößt.

8. Montageeinheit nach einem oder mehreren der vorstehenden Ansprüche, **dadurch gekennzeichnet, daß** das hintere Gehäuseteil (4b) eine Ausnehmung (14) aufweist, in die das Spannelement (11) für das Zugmittel (3) einsteckbar ist.

9. Montageeinheit nach Anspruch 8, **dadurch gekennzeichnet, daß** die Ausnehmung (14) koaxial zu einer Befestigungsbohrung (15) für das Spannelement (11) ist.

10. Montageeinheit nach einem der Ansprüche 8 oder 9, **dadurch gekennzeichnet, daß** an dem Montageexzenter (12) des Spannelements (11) ein Ansatz (13) ausgebildet ist, des-sen Außendurchmesser dem Innendurchmesser der Ausnehmung (14) entspricht.

11. Montageeinheit nach einem oder mehreren der vorstehenden Ansprüche**, dadurch gekennzeichnet, daß** das Zugmittel (3) ein Zahnriemen oder eine Kette ist.

12. Montageeinheit nach einem oder mehreren der vorstehenden Ansprüche, **dadurch gekennzeichnet, daß** die Gehäuseteile (4a,4b) eine schalldämmende Beschichtung aufweisen.

13. Montageeinheit nach Anspruch 1, **dadurch gekennzeichnet, daß** zumindest das Kurbelwellenrad (1) anstatt über nach innen ragende Vorsprünge (5) und entsprechende Ausnehmungen (7) durch eine entsprechend dem Verzahnungsprofil des Kurbelwellenrades (1) profilierte Bohrung fixierbar ist.

14. Montageeinheit nach einem oder mehreren der vorstehenden Ansprüche, **dadurch gekennzeichnet, daß** das Spannelement (11) über eine in dem der Stirnwand (20) des Motors zugeordneten Gehäuseteil (4b) befestigte Blindnietschraube (19) vormontierbar ist.

## Claims

1. Assembly unit of a control drive for the prepositioned assembly on an internal combustion engine, said unit having a transmission housing (4), which comprises at least one front housing part (4a) and one rear housing part (4b), and having the elements of the control drive accommodated in said housing, which elements include at least one crankshaft gear wheel (1), which is mountable on a crankshaft, at least one camshaft gear wheel (2), which is mountable on a camshaft, a drawing means (3), which connects the wheels (1,2), and possibly a tensioning element (11) and additional secondary assemblies, the prepositioning of the control drive being effected by means of arrangements provided on one of the housing parts (4a,4b), characterised in that the elements of the control drive between the housing parts (4a,4b) can be prepositioned in a form-fitting manner on the elements of the control drive by means of inwardly protruding projection members (5,6) and corresponding recesses (7,8) (travelling position A), and the elements of the control drive are exposable by axial displacement of the housing parts (4a,4b) when the assembly unit is assembled on the internal combustion engine (operational position B).

2. Assembly unit according to claim 1, characterised in that the wheels (1,2) in the travelling position (A) are retained between and by the housing parts (4a,4b) for axial securing purposes.

3. Assembly unit according to claim 1, characterised in that the projection members (5,6) have a pin-like configuration.

4. Assembly unit according to claim 1, characterised in that at least two projection members (5,6) are provided for each of the wheels (1,2).

5. Assembly unit according to claim 4, characterised in that the projection members (5,6) are irregularly disposed around a graduated circle.

6. Assembly unit according to claim 1, characterised in that at least the crankshaft gear wheel (1) is secured by a cup-shaped holder (10).

7. Assembly unit according to claim 6, characterised in that the crankshaft gear wheel (1) abuts against the upper part (4b) with its axial flange (10) in the travelling position (A).

8. Assembly unit according to one or more of the preceding claims, characterised in that the rear housing part (4b) has a recess (14), into which the tensioning element (11) for the drawing means (3) is insertable.

9. Assembly unit according to claim 8, characterised in that the recess (14) is coaxial relative to a securing bore (15) for the tensioning element (11).

10. Assembly unit according to one of claims 8 or 9, characterised in that an extension member (13) is provided on the assembly eccentric (12) of the tensioning element (11), the external diameter of said extension member corresponding to the internal diameter of the recess (14).

11. Assembly unit according to one or more of the preceding claims, characterised in that the drawing means (3) is a toothed belt or a chain.

12. Assembly unit according to one or more of the preceding claims, characterised in that the housing parts (4a,4b) have a sound-reducing coating.

13. Assembly unit according to claim 1, characterised in that at least the crankshaft gear wheel (1) is securable by a bore, which is profiled according to the toothed profile of the crankshaft gear wheel (1), instead of via inwardly protruding projection members (5) and corresponding recesses (7).

14. Assembly unit according to one or more of the preceding claims, characterised in that the tensioning element (11) can be pre-assembled via a blind screwed rivet (19), which is secured in the housing part (4b) associated with the end wall (20) of the engine.

## Revendications

1. Module de montage d'un mécanisme de commande pour le montage prépositionné sur un moteur à combustion interne, comprenant une enveloppe (4) du mécanisme se composant d'une partie antérieure d'enveloppe (4a) et d'une partie arrière d'enveloppe (4a), ainsi que les éléments du mécanisme de commande qui y sont logés et qui comprennent au moins une roue (1) de vilebrequin pouvant se monter sur un vilebrequin, au moins une roue (2) d'arbre à cames pouvant se monter sur un arbre à cames, un moyen formant lien (3) reliant les roues (1, 2) ainsi qu'éventuellement un élément tendeur (11) et d'autres ensembles auxiliaires, le prépositionnement du mécanisme de commande étant produit au moyen de dispositifs prévus sur l'une des parties (4a, 4b) de l'enveloppe, caractérisé en ce que les éléments du mécanisme de commande peuvent être prépositionnés (position de transport A) entre les parties (4a, 4b) de l'enveloppe par complémentarité de formes au moyen de protubérances (5, 6) formant saillie vers l'intérieur et de cavités correspondantes (7, 8) que comprennent les éléments du mécanisme de commande et les éléments du mécanisme de cosmmande peuvent être libérés (position de service B) par déplacement axial des parties (4a, 4b) de l'enveloppe lors du montage du module de montage sur le moteur à combustion interne.

2. Module de montage selon la revendication 1, caractérisé en ce que, pour la fixation axiale, les roues (1, 2) sont tenues entre et par les parties (4a, 4b) de l'enveloppe à la position de transport (A).

3. Module de montage selon la revendication 1, caractérisé en ce que les protubérances (5, 6) sont conformées en chevilles.

4. Module de montage selon la revendication 1, caractérisé en ce qu'au moins deux protubérances (5, 6) sont prévues pour chacune des roues (1, 2).

5. Module de montage selon la revendication 4, caractérisé en ce que les protubérances (5, 6) sont disposées irrégulièrement sur un cercle de référence.

6. Module de montage selon la revendication 1, caractérisé en ce qu'au moins la roue (1) du vilebrequin est immobilisée par un organe de retenue en forme de boisseau (10).

7. Module de montage selon la revendication 6, caractérisé en ce que, à la position de transport (A), la roue (1) du vilebrequin est en butée par sa bride axiale (10) contre la partie supérieure (4b).

8. Module de montage selon l'une ou plusieurs des revendications précédentes, caractérisé en ce que la partie arrière (4b) de l'enveloppe comporte un évidement (14) dans lequel l'élément tendeur (11) du moyen formant lien (3) peut être inséré.

9. Module de montage selon la revendication 8, caractérisé en ce que l'évidement (14) est coaxial à un trou (15) de fixation de l'élément tendeur (11).

10. Module de montage selon l'une des revendications 8 ou 9, caractérisé en ce qu'une saillie (13), dont le diamètre extérieur correspond au diamètre intérieur de l'évidement (14), est réalisé sur l'excentrique (12) de montage de l'élément tendeur (11).

11. Module de montage selon l'une ou plusieurs des revendications précédentes, caractérisé en ce que le moyen formant lien (3) est une courroie crantée ou une chaîne.

12. Module de montage selon l'une ou plusieurs des revendications précédentes, caractérisé en ce que les parties (4a, 4b) de l'enveloppe comportent un revêtement insonorisant.

13. Module de montage selon la revendication 1, caractérisé en ce qu'au lieu de pouvoir être fixée par des protubérances (5) formant saillie vers l'intérieur et des cavités correspondantes (7), au moins la roue (1) du vilebrequin peut être fixée par un trou qui est profilé de manière correspondant au profil de la denture de la roue (1) du vilebrequin.

14. Module de montage selon l'une ou plusieurs des revendications précédentes, caractérisé en ce que l'élément tendeur (11) peut être préalablement monté par une vis de rivetage borgne (19) fixée dans la partie (4b) de l'enveloppe associée à la paroi frontale (20) du moteur.
